(19) Europäisches Patentamt
European Patent Office
Office européen des brevets

(11) EP 0 944 676 B1

(12) # EUROPÄISCHE PATENTSCHRIFT

(45) Veröffentlichungstag und Bekanntmachung des Hinweises auf die Patenterteilung:
**02.10.2002 Patentblatt 2002/40**

(21) Anmeldenummer: **97951909.7**

(22) Anmeldetag: **18.11.1997**

(51) Int Cl.[7]: **C09B 67/38**, C09B 67/46, C09D 11/00, D06P 1/00, B41M 5/38

(86) Internationale Anmeldenummer:
**PCT/EP97/06420**

(87) Internationale Veröffentlichungsnummer:
**WO 98/024850 (11.06.1998 Gazette 1998/23)**

(54) **FARBSTOFFZUBEREITUNGEN, ENTHALTEND METHINFARBSTOFFE**

DYE PREPARATIONS CONTAINING METHINE DYES

PREPARATIONS DE COLORANTS CONTENANT DES COLORANTS METHINIQUES

(84) Benannte Vertragsstaaten:
**DE FR GB IT**

(30) Priorität: **02.12.1996 DE 19649802**

(43) Veröffentlichungstag der Anmeldung:
**29.09.1999 Patentblatt 1999/39**

(73) Patentinhaber: **BASF AKTIENGESELLSCHAFT**
**67056 Ludwigshafen (DE)**

(72) Erfinder:
- **SENS, Rüdiger**
  **D-68165 Mannheim (DE)**
- **SIEGEL, Bernd**
  **D-67166 Otterstadt (DE)**
- **HERRMANN, Manfred**
  **D-67061 Ludwigshafen (DE)**

(56) Entgegenhaltungen:

| | |
|---|---|
| **EP-A- 0 655 527** | **EP-A- 0 727 463** |
| **EP-A- 0 764 695** | **DE-A- 1 955 067** |
| **DE-A- 2 614 257** | **DE-A- 3 140 521** |
| **DE-A- 4 344 116** | |

- **DATABASE WPI Section Ch, Week 8708 Derwent Publications Ltd., London, GB; Class A25, AN 87-054639 XP002057950 & JP 62 011 780 A (MITSUBISHI CHEM IND LTD) , 20.Januar 1987**
- **DATABASE WPI Section Ch, Week 9425 Derwent Publications Ltd., London, GB; Class A23, AN 94-206738 XP002057951 & JP 06 145 568 A (KANEBO LTD) , 24.Mai 1994**
- **DATABASE WPI Section Ch, Week 9344 Derwent Publications Ltd., London, GB; Class A23, AN 93-348635 XP002057952 & JP 05 255 626 A (KANEBO LTD) , 5.Oktober 1993**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft neue Farbstoffzubereitungen, enthaltend, jeweils bezogen auf das Gewicht der Zubereitung, 0,1 bis 30 Gew.-% eines oder mehrerer Methinfarbstoffe, 0,1 bis 20 Gew.-% eines Dispergiermittels auf Basis eines Arylsulfonsäure-Formaldehyd-Kondensationsprodukts, das einen Gehalt von 3 bis 50 Gew.-%, bezogen auf das Gewicht des Dispergiermittels, einer oder mehrerer aromatischer oder langkettiger aliphatischer Carbonsäuren, deren Salzen, deren Anhydriden oder einer Mischung hieraus aufweist, oder 0,1 bis 20 Gew.-% eines wasserlöslichen Dispergiermittels auf Basis von oxalkylierten Phenolen und gegebenenfalls Wasser,

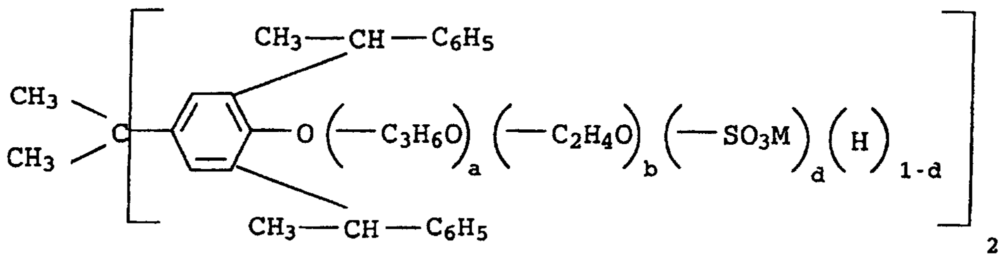

(III)

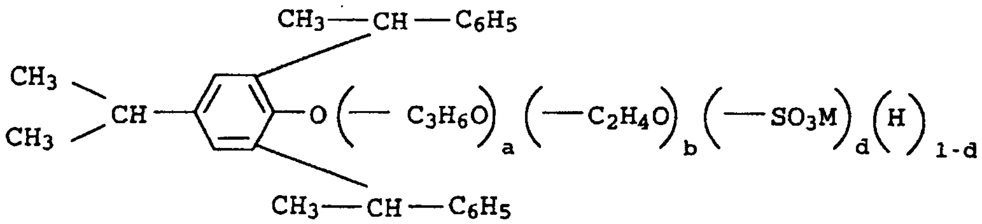

(IV),

worin

M Alkalimetall, beispielsweise Na oder K,

a 0 bis im Mittel 125,

b im Mittel 37 bis 250, wobei im Falle b>37, das Verhältnis b:a mindestens 1:1 ist, und

d 0 oder 1 bedeuten,

oder deren Gemische
und gegebenenfalls Wasser.
sowie ihre Verwendung als Tinten im Ink-Jet-Verfahren und für den textilen Sublimations-Transferdruck.
Aus der EP-A-655 527 sind bereits Farbstoffzubereitungen, enthaltend Dispersionsfarbstoffe und spezielle Dispergiermittel, bekannt.
JP-A05 255 626 beschreibt Ink-Jet-Tinten auf der Basis von Methinfarbstoffen, die mit beispielsweise Lignin-Sulfonsäure, Naphthalinsulfonsäure-Formaldehyd-Kondensationsprodukten oder Schäffer-Säure-Kresol-Natriumbisulfit-Formaldehyd-Kondensationsprodukten dispergiert werden können. Solcherart hergestellte Farbmittelzubereitungen lassen sich im Ink-Jet-Verfahren als Tinten verwenden. Es hat sich jedoch gezeigt, daß die solcherart hergestellten Farbmittelzubereitungen beim Verdrucken zum Verstopfen der Düsen führen, insbesondere dann, wenn man die Farbmittelzubereitungen längere Zeit gelagert hat.
EP-A 0 727 463 beschreibt die Herstellung von Methinfarbstoffen und ihre Verwendung in Druckfarben auf der Basis nicht-wässriger Lösemittel (Seite 11, Zeile 25 ff), wobei als Vorteil die hohe Löslichkeit im Farbband herausgestellt wird.

Aufgabe der vorliegenden Erfindung war es, neue Farbstoffzubereitungen, enthaltend Methinfarbstoffe, insbesondere auf Pyridinbasis, bereitzustellen. Die neuen Farbstoffzubereitungen sollten sich vorteilhaft für die Anwendung im Ink-Jet-Verfahren sowie beim textilen Sublimations-Transferdruck eignen.

Demgemäß wurden die eingangs näher bezeichneten Farbstoffzubereitungen gefunden.

Geeignete Methinfarbstoffe sind insbesondere Pyridinfarbstoffe. Diese gehorchen z.B. der Formel Ia, Ib oder Ic

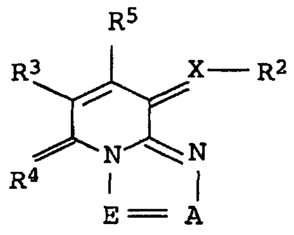

(Ia),

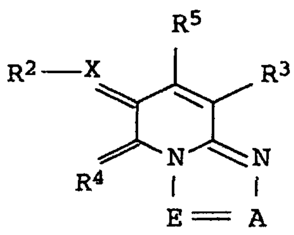

(Ib),

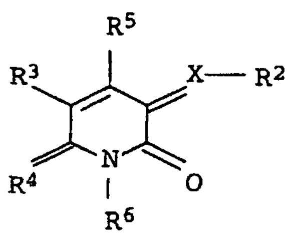

(Ic),

worin

X Stickstoff oder CH,
einer der beiden Reste A oder E Stickstoff und der andere einen Rest der Formel C-$R^1$, in der $R^1$ für $C_1$-$C_{20}$-Alkyl, das gegebenenfalls substituiert ist und durch ein bis vier Sauerstoffatome in Etherfunktion unterbrochen sein kann, gegebenenfalls substituiertes Phenyl oder Hydroxy steht,

$R^2$ einen Rest aus der Benzol-, Indol-, Chinolin-, Aminonaphthalin-, Pyrrol-, Benzimidazol-, Benzthiazol-, Aminothiophen- oder Diaminopyridinreihe,

$R^3$ Cyano, Carbamoyl, Carboxyl oder $C_1$-$C_4$-Alkoxycarbonyl,

$R^4$ Sauerstoff oder einen Rest der Formel $C(CN)_2$, $C(CN)COOL^1$ oder $C(COOL^1)_2$, wobei $L^1$ jeweils für $C_1$-$C_8$-Alkyl, das gegebenenfalls durch ein oder zwei Sauerstoffatome in Etherfunktion unterbrochen ist, oder Phenyl steht,

$R^5$ Wasserstoff, $C_1$-$C_8$-Alkyl, das gegebenenfalls substituiert ist und durch ein oder zwei Sauerstoffatome in Etherfunktion unterbrochen sein kann, oder gegebenenfalls substituiertes Phenyl und

$R^6$ $C_1$-$C_{20}$-Alkyl, das gegebenenfalls substituiert ist und durch ein bis vier Sauerstoffatome in Etherfunktion unterbrochen sein kann, gegebenenfalls substituiertes Phenyl, Hydroxy oder einen Rest der Formel $NL^2L^3$, wobei $L^2$ und $L^3$ unabhängig voneinander jeweils für Wasserstoff, gegebenenfalls substituiertes $C_1$-$C_{12}$-Alkyl, $C_5$-$C_7$-Cycloalkyl, gegebenenfalls substituiertes Phenyl, gegebenenfalls substituiertes Pyridyl, gegebenenfalls substituiertes $C_1$-$C_{12}$-Alkanoyl, $C_1$-$C_{12}$-Alkoxycarbonyl, gegebenenfalls substituiertes $C_1$-$C_{12}$-Alkylsulfonyl, $C_5$-$C_7$-Cycloalkylsulfonyl, gegebenenfalls substituiertes Phenylsulfonyl, gegebenenfalls substituiertes Pyridylsulfonyl. gegebenenfalls substituiertes Benzoyl, Pyridylcarbonyl oder Thienylcarbonyl oder $L^2$ und $L^3$ zusammen mit dem sie verbindenden Stickstoffatom gegebenenfalls durch $C_1$-$C_4$-Alkyl substituiertes Succinimido, gegebenenfalls durch $C_1$-$C_4$-Alkyl substituiertes Phthalimido oder einen fünf- oder sechsgliedrigen gesättigten heterocyclischen Rest, der gegebenenfalls weitere Heteroatome enthält, stehen, bedeuten.

Wichtige Resce $R^2$ sind z.B. solche der Formeln II bis IIj

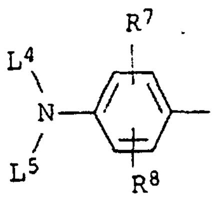 ,

(IIa)

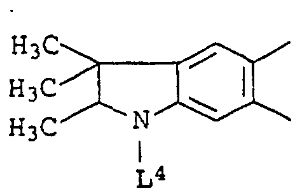 ,

(IIb)

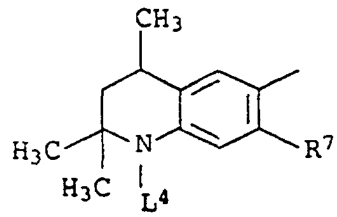 ,

(IIc)

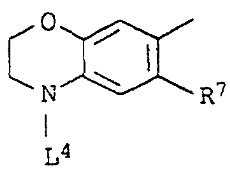 ,

(IId)

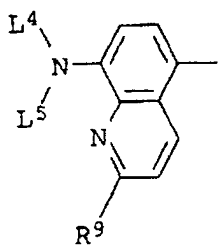 ,

(IIe)

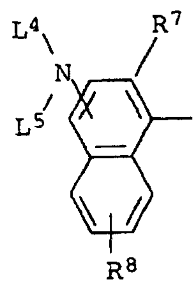 ,

(IIf)

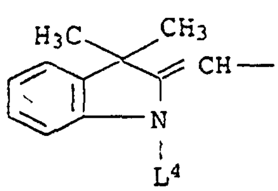

IIg)

oder

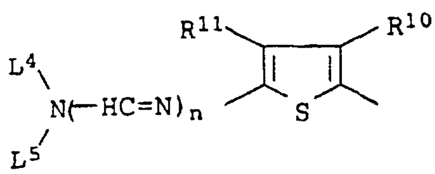 ,

(IIh)

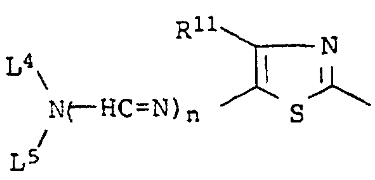

oder

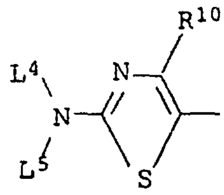

,

(IIi) (IIj)

worin

n 0 oder 1,

$R^7$ für Wasserstoff, $C_1$-$C_8$-Alkyl, das gegebenenfalls durch ein oder zwei Sauerstoffatome in Etherfunktion unterbrochen ist, Hydroxy, $C_1$-$C_4$-Alkoxy, das durch Hydroxy substituiert sein kann, insbesondere Methoxy oder Ethoxy, Formylamino, $C_1$-$C_4$-Alkylsulfonylamino, $C_1$-$C_4$-Mono- oder Dialkylaminosulfonylamino oder den Rest -NHCONHQ, -NHCOQ oder -$NHCO_2Q$, wobei Q die Bedeutung von Phenyl, Benzyl, $C_1$-$C_4$-Alkylphenyl oder $C_1$-$C_8$-Alkyl, das gegebenenfalls durch ein oder zwei Sauerstoffatome in Etherfunktion unterbrochen ist, besitzt,

$R^8$ für Wasserstoff, $C_1$-$C_4$-Alkyl, insbesondere Methyl, oder $C_1$-$C_4$-Alkoxy, insbesondere Methoxy oder Ethoxy,

$L^4$ und $L^5$ unabhängig voneinander jeweils für Wasserstoff, $C_1$-$C_8$-Alkyl, das gegebenenfalls substituiert ist und durch ein oder zwei Sauerstoffatome in Etherfunktion unterbrochen sein kann, $C_3$-$C_4$-Alkenyl, $C_5$-$C_7$-Cycloalkyl, gegebenenfalls substituiertes Phenyl oder zusammen mit dem sie verbindenden Stickstoffatom für einen fünf- oder sechsgliedrigen gesättigten heterocyclischen Rest, der gegebenenfalls weitere Heteroatome enthält,

$R^9$ für Wasserstoff oder $C_1$-$C_4$-Alkyl, insbesondere Methyl,

$R^{10}$ für Wasserstoff, Halogen, $C_1$-$C_8$-Alkyl, gegebenenfalls substituiertes Phenyl, gegebenenfalls substituiertes Benzyl, Cyclohexyl, Thienyl, Hydroxy, $C_1$-$C_4$-Alkoxy, $C_1$-$C_4$-Alkylthio oder $C_1$-$C_8$-Monoalkylamino und

$R^{11}$ für Cyano, Carbamoyl, $C_1$-$C_8$-Mono- oder Dialkylcarbamoyl, $C_1$-$C_8$-Alkoxycarbonyl oder gegebenenfalls substituiertes Phenyl stehen.

Wenn in den obengenannten Formeln substituierte Alkylreste auftreten, so können als Substituenten z.B. gegebenenfalls substituiertes Phenyl, $C_1$-$C_8$-Alkanoyloxy, $C_1$-$C_8$-Alkylaminocarbonyloxy, $C_1$-$C_{20}$-Alkoxycarbonyl, $C_1$-$C_{20}$-Alkoxycarbonyloxy, wobei die Alkylkette der beiden letztgenannten Reste gegebenenfalls durch ein oder vier Sauerstoffatome in Etherfunktion unterbrochen und/oder durch Phenyl oder Phenoxy substituiert ist, Halogen, Hydroxy oder Cyano in Betracht kommen. Die Alkylreste weisen dabei in der Regel ein bis drei, vorzugsweise ein oder zwei, Substituenten auf.
Wenn in den obengenannten Formeln Alkylreste auftreten, die durch Sauerstoffatome in Etherfunktion unterbrochen sind, so sind solche Alkylreste bevorzugt, die durch ein oder zwei Sauerstoffatome in Etherfunktion unterbrochen sind.
Wenn in den obengenannten Formeln substituierte Phenyl- oder Pyridylreste auftreten, so können als Substituenten z.B. $C_1$-$C_8$-Alkyl, $C_1$-$C_8$-Alkoxy, $C_1$-$C_4$-Alkanoyloxy, Halogen, dabei insbesondere Chlor oder Brom, oder Carboxyl in Betracht kommen. Die Phenyl- oder Pyridylreste weisen dabei in der Regel ein bis drei Substituenten auf.
Alle in den obengenannten Formeln auftretenden Alkylreste können sowohl geradkettig als auch verzweigt sein.
Geeignete Reste $L^1$, $L^2$, $L^3$, $L^4$, $L^5$, Q, $R^1$, $R^5$, $R^6$, $R^7$, $R^8$, $R^9$ und $R^{10}$, sind z.B. Methyl, Ethyl, Propyl, Isopropyl, Butyl, Isobutyl, sec-Butyl oder tert-Butyl.
Reste $L^1$, $L^2$, $L^3$, $L^4$, $L^5$, Q, $R^1$, $R^5$, $R^6$, $R^7$ und $R^{10}$ sind weiterhin z.B. Pentyl, Isopentyl, Neopentyl, tert-Pentyl, Hexyl, 2-Methylpentyl, Heptyl, 1-Ethylpentyl, Octyl, 2-Ethylhexyl oder Isooctyl.
Reste $L^2$, $L^3$, $R^1$ und $R^6$ sind weiterhin z.B. Nonyl, Isononyl, Decyl, Isodecyl, Undecyl oder Dodecyl.

Reste $R^1$ und $R^6$ sind weiterhin z.B. Tridecyl, Isotridecyl, Tetradecyl, Pentadecyl, Hexadecyl, Heptadecyl, Octadecyl, Nonadecyl oder Eicosyl. (Die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmann's Encyclopedia of Industrial Chemistry, 5th Edition, Vol. A 1, Seiten 290 bis 293, sowie Vol. A 10, Seiten 284 und 285).

Reste $L^1$, $L^4$, $L^5$, Q, $R^1$, $R^5$ und $R^6$ sind weiterhin z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- oder 4-Butoxybutyl oder 4,8-Dioxadecyl.

Reste $R^1$ und $R^6$ sind weiterhin z.B. 3,6,9-Trioxadecyl, 3,6,9-Trioxaundecyl, 3,6,9-Trioxadodecyl, 3,6,9,12-Tetraoxatridecyl, 3,6,9,12-Tetraoxatetradecyl, 11-Oxahexadecyl, 13-Butyl-11-oxaheptadecyl oder 4,11-Dioxapentadecyl.

Reste $R^3$, $R^{11}$, $L^2$ und $L^3$ sind z.B. Methoxycarbonyl, Ethoxycarbonyl, Propoxycarbonyl, Isopropoxycarbonyl, Butoxycarbonyl, Isobutoxycarbonyl oder sec-Butoxycarbonyl.

Reste $R^{11}$ sind weiterhin z.B. Mono- oder Dimethylcarbamoyl, Monooder Diethylcarbamoyl, Mono- oder Dipropylcarbamcyl, Mono- oder Diisopropylcarbamoyl, Mono- oder Dibutylcarbamoyl oder N-Methyl-N-butylcarbamoyl.

Reste $R^7$, $R^8$ und $R^{10}$ sind weiterhin z.B. Methoxy, Ethoxy, Propoxy, Isopropoxy, Butoxy, Isobutoxy oder sec-Butoxy.

Reste $R^{10}$ sind weiterhin z.B. Methylthio, Ethylthio, Propylthio, Isopropylthio, Butylthio, Isobutylthio oder sec-Butylthio.

Reste $L^2$, $L^4$, $L^5$, $R^1$, $R^5$, $R^6$ und $R^{10}$ sind weiterhin z.B. Phenyl, 2-, 3- oder 4-Methylphenyl, 2-, 3- oder 4-Ethylphenyl, 2-, 3-oder 4-Propylphenyl, 2-, 3- oder 4-Isopropylphenyl, 2-, 3- oder 4-Butylphenyl, 2,4-Dimethylphenyl, 2-, 3- oder 4-Methoxyphenyl, 2-, 3- oder 4-Ethoxyphenyl, 2-, 3- oder 4-Isobutoxyphenyl, 2,4-Dimethoxyphenyl, 2-, 3- oder 4-Formyloxyphenyl, 2-, 3- oder 4-Acetyloxyphenyl, 2-, 3- oder 4-Propionyloxyphenyl, 2-, 3- oder 4-Chlorphenyl oder 2-, 3- oder 4-Carboxyphenyl.

Reste $L^2$, $L^4$, $L^5$, $R^1$, $R^5$ und $R^6$ sind weiterhin z.B. 2-Chlorethyl, Trifluormethyl, 2- oder 3-Chlorpropyl, Benzyl, 1- oder 2-Phenylethyl, 3-Benzyloxypropyl, Phenoxymethyl, 6-Phenoxy-4-oxahexyl, 8-Phenoxy-4-oxahexyl, 2-Hydroxyethyl, 2- oder 3-Hydroxypropyl, 2-Cyanoethyl, 2- oder 3-Cyanopropyl, 2-Acetyloxyethyl, 2- oder 3-Acetyloxypropyl, 2-Isobutyryloxyethyl, 2- oder 3-Isobutyryloxypropyl, 2-Methoxycarbonylethyl, 2- oder 3-Methoxycarbonylpropyl, 2-Ethoxycarbonylethyl, 2- oder 3-Ethoxycarbonylpropyl, 2-Methoxycarbonyloxyethyl, 2- oder 3-Methoxycarbonyloxypropyl, 2-Ethoxycarbonyloxyethyl, 2- oder 3-Ethoxycarbonyloxypropyl, 2-Butoxycarbonyloxyethyl, 2- oder 3-Butoxycarbonyloxypropyl, 2-(2-Phenylethoxycarbonyloxy)ethyl, 2- oder 3- (2-Pehenylethoxycarbonyloxy)propyl, 2-(2-Ethoxyethoxycarbonyloxy)ethyl oder 2- oder 3-(2-Ethoxyethoxycarbonyloxy)propyl.

Reste $L^2$ und $L^3$ sind weiterhin z.B. Formyl, Acetyl, Propionyl, Butyryl, Isobutyryl, Pentanoyl, Hexanoyl, Heptanoyl, Octanoyl, 2-Ethylhexanoyl, Methylsulfonyl, Ethylsulfonyl, Propylsulfonyl, Isopropylsulfonyl, Butylsulfonyl, Cyclopentylsulfonyl, Cyclohexylsulfonyl, Cycloheptylsulfonyl, Phenylsulfonyl, Tolylsulfonyl, Pyridylsulfonyl, Benzoyl, 2-, 3- oder 4-Methylbenzoyl, 2-, 3-oder 4-Methoxybenzoyl, Thien-2-ylcarbonyl oder Thien-3-ylcarbonyl.

Reste $L^2$, $L^3$ und Y sind weiterhin z.B. Pyridyl, 2-, 3- oder 4-Methylpyridyl oder 2-, 3- oder 4-Methoxypyridyl.

Reste $L^2$, $L^3$, $L^4$ und $L^5$ sind weiterhin z.B. Cyclopentyl, Cyclohexyl, Cycloheptyl, Methylcyclopentyl oder Methylcyclohexyl.

Reste $R^7$ sind z.B. Methylsulfonylamino, Ethylsulfonylamino, Propylsulfonylamino, Isopropylsulfonylamino, Butylsulfonylamino, Mono- oder Dimethylaminosulfonylamino, Mono- oder Diethylaminosulfonylamino. Mono- oder Dipropylaminosulfonylamino, Mono- oder Diisopropylaminosulfonylamino, Mono- oder Dibutylaminosulfonylamino, (N-Methyl-N-ethylaminosulfonyl)amino, 2-Hydroxyethoxy, 2-oder 3-Hydroxypropoxy oder 2- oder 4-Hydroxybutoxy.

Reste $R^{10}$ sind weiterhin z.B. Fluor, Chlor, Brom, Benzyl, 2-Methylbenzyl, 2,4-Dimethylbenzyl, 2-Methoxybenzyl, 2,4-Dimethoxybenzyl, Methylamino, Ethylamino, Propylamino, Isopropylamino, Butylamino, Pentylamino, Hexylamino, Heptylamino, Octylamino oder 2-Ethylhexylamino.

Wenn $L^2$ und $L^3$ oder $L^4$ und $L^5$ jeweils zusammen mit dem sie verbindenden Stickstoffatom einen fünf- oder sechsgliedrigen gesättigten heterocyclischen Rest, der gegebenenfalls weitere Heteroatome enthält, bedeuten, so können dafür z.B. Pyrrolidinyl, Piperidinyl, Morpholinyl, Piperazinyl oder N-($C_1$-$C_4$-Alkyl)piperazinyl in Betracht kommen.

Bevorzugt werden Pyridinfarbstoffe der Formel Ia, Ib oder Ic, in der $R^3$ Cyano bedeuten, in den erfindungsgemäßen Farbstoffzubereitungen verwendet.

Weiterhin bevorzugt werden Pyridinfarbstoffe der Formel Ia, Ib oder Ic, in der $R^4$ Sauerstoff bedeutet, in den erfindungsgemäßen Farbstoffzubereitungen verwendet.

Weiterhin bevorzugt werden Pyridinfarbstoffe der Formel Ia, Ib oder Ic, in der $R^5$ Methyl bedeutet, in den erfindungsgemäßen Farbstoffzubereitungen verwendet.

Weiterhin bevorzugt werden Pyridinfarbstoffe der Formel Ic, in der $R^5$ Trifluormethyl bedeutet, in den erfindungsgemäßen Farbstoffzubereitungen verwendet.

Weiterhin bevorzugt werden Pyridinfarbstoffe der Formel Ia, Ib oder Ic, in der $R^1$ und $R^6$ unabhängig voneinander jeweils $C_1$-$C_{12}$-Alkyl, das gegebenenfalls durch $C_1$-$C_6$-Alkanoyloxy, $C_1$-$C_8$-Alkoxycarbonyl, deren Alkylkette jeweils durch ein oder zwei Sauerstoffatome in Etherfunktion unterbrochen sein kann, Phenyl oder $C_1$-$C_4$-Alkylphenyl substituiert ist und durch ein oder zwei Sauerstoffatome in Etherfunktion unterbrochen sein kann, bedeuten, in den erfindungsgemäßen Farbstoffzubereitungen verwendet.

Insbesondere bevorzugt werden Pyridinfarbstoffe der Formel Ia, Ib oder Ic, in der $R^1$ und $R^6$ unabhängig voneinander jeweils Alkyl, Alkoxyalkyl, Alkanoyloxyalkyl oder Alkoxycarbonylalkyl, wobei diese Reste jeweils bis zu zwölf Kohlenstoffatome aufweisen, gegebenenfalls durch Methyl substituiertes Benzyl oder gegebenenfalls durch Methyl substituiertes Phenyl bedeutet, in den erfindungsgemäßen Farbstoffzubereitungen verwendet.

Weiterhin bevorzugt werden Pyridinfarbstoffe der Formel Ia, Ib oder Ic, in der $R^2$ einen Rest aus der Anilin- oder Thiazolreihe, insbesondere einen Rest der Formel IIa oder IIj, bedeutet, in den erfindungsgemäßen Farbstoffzubereitungen verwendet.

Wenn der Pyridinfarbstoff in der Farbstoffmischung ein Triazolopyridinfarbstoff der Formel Ia oder Ib ist, werden insbesondere solche der Formel Ia, in der A einen Rest der Formel C-$R^1$ und E Stickstoff bedeuten, in den erfindungsgemäßen Farbstoffzubereitungen verwendet.

Besonders bevorzugt werden weiterhin Pyridinfarbstoffe der Formel Ia, Ib oder Ic, in der $R^2$ einen Rest der Formel IIj bedeutet, worin $L^4$ und $L^5$ unabhängig voneinander jeweils für $C_1$-$C_6$-Alkyl und $R^{10}$ für $C_1$-$C_6$-Alkyl oder Phenyl stehen, in den erfindungsgemäßen Farbstoffzubereitungen verwendet.

Die Pyridinfarbstoffe der Formel I sind an sich bekannt und beispielsweise in der US-A-5 079 365, WO-A-95/17470, WO-A-95/22581 oder in der älteren Patentanmeldung EP-A-727 463 beschrieben oder können nach den dort genannten Methoden erhalten werden.

Bevorzugt sind Farbstoffzubereitungen, in denen 99 % der in der Zubereitung enthaltenen Farbstoffteilchen kleiner sind als 1 µm.

Vorzugsweise verwendet man als Dispergiermittel ein Arylsulfonsäure-Formaldehyd-Kondensationsprodukt, das einen Gehalt von 3 bis 50 Gew.-%, bezogen auf das Gewicht des Dispergiermittels, einer oder mehrerer aromatischen oder langkettigen aliphatischen Carbonsäuren, deren Salzen, deren Anhydriden oder einer Mischung hieraus aufweist.

Als Arylsulfonsäure-Formaldehyd-Kondensate werden vor allem solche mit einem maximalen Gehalt an Sulfonsäuregruppen von 40 Gew.-% verwendet.

Als Ausgangsprodukt für die Arylsulfonsäuren kommt insbesondere ein Gemisch solcher aromatischer Verbindungen in Betracht, die durch thermische Spaltung eines naphthenischen Rückstandsöls und Fraktionieren der Spaltprodukte erhältlich sind. Die naphthenischen Rückstandsöle fallen beispielsweise beim Cracken von Leichtbenzin an. Sie werden z.B. in der DE-A-2 947 005 als hochsiedende aromatische Kohlenwasserstofföle bezeichnet. Das naphthenische Rückstandsöl wird vorzugsweise bei einer Temperatur von 1400 bis 1700°C thermisch gespalten. Die Spaltprodukte werden dann einer fraktionierenden Destillation zugeführt. Die bei Normaldruck (1013 mbar) von 100 bis 120°C übergehende Fraktion wird gesammelt und als aromatische Verbindung der Sulfonierung zugeführt. Eine solche Fraktion wird bei dem bekannten Acetylen-Öl-Quench-Prozeß üblicherweise als Nebenprodukt erhalten (Ullmann's Encyclopedia of Industrial Chemistry, VCH Verlagsgesellschaft mbH, Weinheim, 1985, Volume A1, Seiten 107 bis 112).

Diese Aromatenfraktion besteht aus einer Mischung vieler aromatischer Substanzen, deren Struktur und Menge praktisch nicht im einzelnen ermittelt werden kann. Folgende Arylverbindungen sind die hauptsächlichsten Vertreter dieser Aromatenfraktion:

| | Gew.-% in der Aromatenfraktion |
|---|---|
| Naphthalin | 30-55 |
| 2-Methylnaphthalin | 5-15 |
| 1-Methylnaphthalin | 4-10 |
| Inden | 3-10 |
| Diphenyl | 1- 5 |
| Methylinden | 1- 5 |
| Acenaphthen | 1- 4 |

Die Aromatenfraktion enthält außerdem an identifizierten Bestandteilen in Mengen von 0,1 bis etwa 2 Gew. % folgende Arylverbindungen: Fluoren, Indan, Methylstyrol, Phenanthren, Methylindan, Dimethylnaphthalin, Ethylnaphthalin, Xylole, Tetralin, Styrol, Methylethylbenzol, Anthracen, Fluoranthren, Pyren, Acenaphthylen und Toluol.

Besonders geeignete Arylsulfonsäuren enthalten in der Regel α-und β-Naphthalinsulfonsäuren, wobei das Verhältnis der α- zu den β-Isomeren 20:1 bis 1:8, insbesondere 10:1 bis 1:5 beträgt.

Geeignete aromatische Carbonsäuren oder deren Derivate sind beispielsweise Naphthalincarbonsäure, Naphthalsäure, Terephthalsäure, Isophthalsäure, Benzoesäure, Trimellitsäure, Phenylessigsäure, Phenoxyessigsäure, Salicylsäure, p-Hydroxybenzoesäure, Diphenylessigsäure, m-Hydroxybenzoesäure, Benzoltetracarbonsäure oder Säureanhydride, wie Phthalsäureanhydrid, Trimellitsäureanhydrid, Benzol-1,2,4,5-tetracarbonsäuredianhydrid oder Naphthalsäureanhydrid.

Geeignete langkettige aliphatische Carbonsäuren sind insbesondere gesättigte oder olefinisch ungesättigte, lineare oder verzweigte aliphatische Monocarbonsäuren mit 8 bis 22, vorzugsweise 8 bis 18 Kohlenstoffatomen natürlichen oder synthetischen Ursprungs, beispielsweise höhere Fettsäuren wie Caprylsäure, Caprinsäure, Laurinsäure, Myristinsäure, Palmitinsäure, Stearinsäure, Ölsäure, Linolsäure oder Linolensäure, oder synthetisch hergestellte Carbonsäuren wie 2-Ethylhexansäure, Isononansäure oder Isotridecansäure.

Weiterhin sind auch Mischungen von Anhydriden, Mischungen von Carbonsäuren, Mischungen von Salzen der in Betracht kommenden Carbonsäuren sowie Mischungen von Carbonsäuren und Anhydriden von Interesse. Als Salze der genannten Carbonsäuren kommen die Alkali-, Ammonium- oder Erdalkalisalze in Betracht, die beispielsweise durch Neutralisation dieser Carbonsäuren mit Natronlauge, Kalilauge, Lithiumhydroxid, Soda, Magnesiumcarbonat, Calciumoxid, Calciumhydroxid, Ammoniak oder Alkanolaminen, wie Ethanolamin, Diethanolamin oder Triethanolamin, erhältlich sind.

Besonders bevorzugt werden Natriumbenzoat, Natriumphenylacetat, Natriumsalicylat, Natrium-4-hydroxybenzoat, Natriumterephthalat, Natrium-2-hydroxy-3-naphthalincarboxylat, Naphthalin-1-carbonsäure, Phthalsäureanhydrid oder Benzoesäure in den Dispergiermitteln verwendet.

In den erfindungsgemäßen Farbstoffzubereitungen kommen vorzugsweise solche Dispergiermittel zur Anwendung, die

A) 50 bis 97 Gew.-%, insbesondere 70 bis 95 Gew.-%, einer oder mehrerer Arylsulfonsäure-Formaldehyd-Kondensate und

B) 3 bis 50 Gew.-%, insbesondere 5 bis 30 Gew.-%, einer oder mehrerer aromatischen oder langkettigen aliphatischen Carbonsäuren, deren Salzen oder deren Anhydriden oder einer Mischung hieraus enthalten.

Bei den erfindungsgemäß als Dispergiermittel zur Anwendung gelanggenden Arylsulfonsäure-Formaldehyd-Kondensationsprodukten handelt es sich um an sich bekannte Produkte. Sie sind z.B. in der US-A-5 186 846 beschrieben.

Vorzugsweise verwendet man als wasserlösliche Dispergiermittel auf Basis von oxalkylierten Phenolen solche der Formel III oder IV

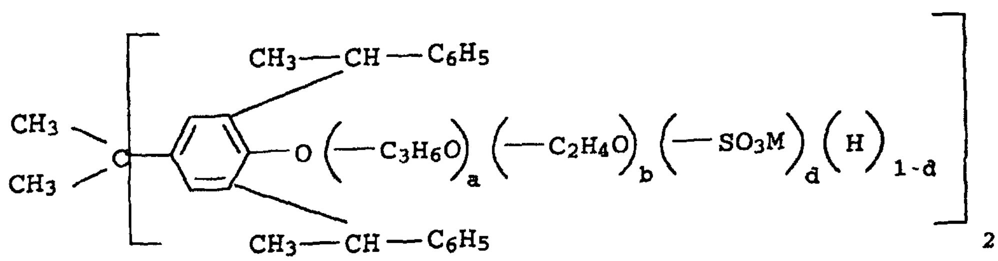

(III)

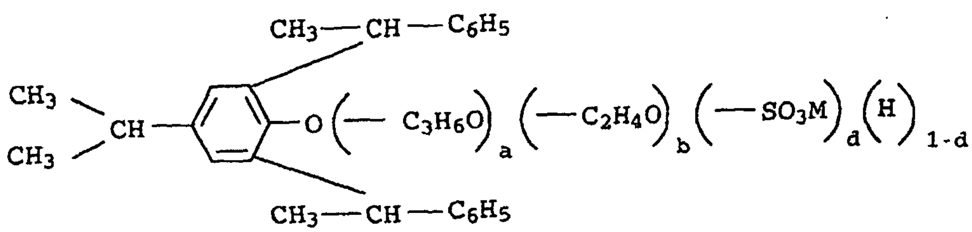

(IV),

worin

M Alkalimetall, beispielsweise Na oder K,

a 0 bis im Mittel 125,

b im Mittel 37 bis 250, wobei im Falle b>37, das Verhältnis b:a mindestens 1:1 ist, und

d 0 oder 1 bedeuten,

oder deren Gemische

Die Produkte der Formel III und IV werden durch Umsetzen der Phenol derivate der Forme V oder VI

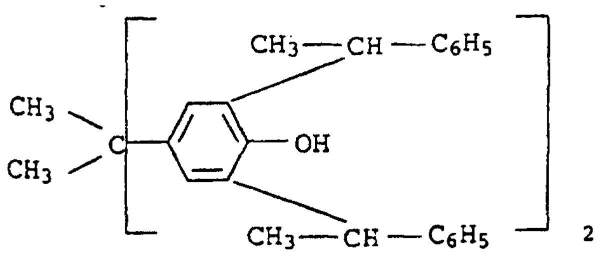

(V)

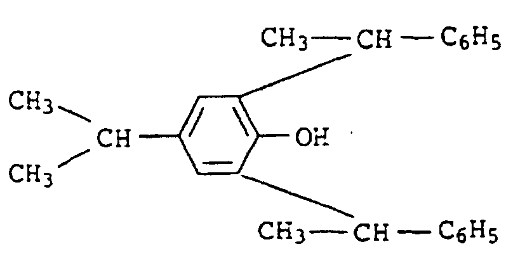

(VI)

mit Propylenoxid und folgender Umsetzung des Adduktes mit Ethylenoxid oder durch Umsetzen von V und/oder VI mit Ethylenoxid erhalten. Gegebenenfalls werden die Addukte mit Chlorsulfonsäure oder Schwefeltrioxid vollständig oder partiell zu Schwefelsäurehalbester umgesetzt und die erhaltenen Halbester mit alkalisch wirkenden Mitteln neutral

gestellt.

Die Phenole der Formel V und VI werden durch Umsetzen von Phenol oder 2,2-(p,p'-Bishydroxydiphenyl) propan mit 3 oder 4 mol Styrol in Gegenwart von Säure als Katalysator erhalten. Die Phenole V und VI werden nach bekannten Verfahren zuerst mit Ethylenoxid oder nur mit Ethylenoxid in Gegenwart von sauer oder alkalisch wirkenden Katalysatoren zu den entsprechenden Oxalkylierungsprodukten III und IV mit d=O umgesetzt. Die Oxalkylierung kann z.B. nach dem in der US-A-2 979 528 beschriebenen Verfahren erfolgen. Für den Fall, daß b > 37 ist, muß der Quotient

$$\frac{b}{a} > 1 \text{ sein.}$$

Die Schwefelsäurehalbester werden durch Reaktion der Oxalkylierungsprodukte mit Chlorsulfonsäure oder Schwefeltrioxid hergestellt. wobei die Menge so gewählt werden kann, daß alle freien Hydroxygruppen oder nur ein Teil sulfatiert wird. Im letzteren Falle entstehen Gemische aus Verbindungen der Formel III und IV, die freie und sulfatierte Hydroxygruppen enthalten. Zur Verwendung als Dispergiermittel werden die bei der Umsetzung erhaltenen Halbester der Schwefelsäure in wasserlösliche Salze überführt. Als solche kommen vorteilhaft die Alkalimetallsalze. z.B. die Natrium- oder Kaliumsalze, in Betracht. Dabei sind im Falle von Chlorsulfonsäure zwei Äquivalente, bei Schwefeltrioxid ein Äquivalent basisch wirkender Verbindungen erforderlich. Als letztere verwendet man zweckmäßigerweise wäßriges Alkalimetallhydroxid. Bei der Neutralisation sollte die Temperatur 70°C nicht überschreiten. Die erhaltenen Salze können in Form von wäßrigen Lösungen oder auch als solche isoliert und in fester Form verwendet werden.

Bevorzugt sind Farbstoffzubereitungen mit Dispergiermitteln, worin a 0 bis im Mittel 2,5,b im Mittel 37 bis 250 und d 0 bis im Mittel 0,5 ist. Ganz besonders bevorzugt sind Zubereitungen mit Mitteln, in denen a 0 bis im Mittel 2,5, b im Mittel 50 bis 100 und d im Mittel 0,5 ist.

Bei den obengenannten Dispergiermitteln handelt es sich um an sich bekannte Verbindungen. Sie sind z.B. aus der US-A-4 218 218 bekannt.

Bevorzugt sind Farbstoffzubereitungen, die jeweils bezogen auf das Gewicht der Zubereitung 1 bis 15 Gew.-% eines oder mehrerer Pyridinfarbstoffe, 0,5 bis 10 Gew.-% Dispergiermittel und gegebenenfalls Wasser enthalten.

Weiterhin bevorzugt sind Farbstoffzubereitungen, die zusätzlich, jeweils bezogen auf das Gewicht der Zubereitung, 0,1 bis 30 Gew.-%, vorzugsweise 0,1 bis 25 Gew.-%, eines Kohlenhydrats und 0,1 bis 20 Gew.-%, vorzugsweise 0,1 bis 15 Gew.-%, eines Polyalkylenglykols enthalten.

Geeignete Kohlenhydrate, die in den erfindungsgemäßen Farbstoffzubereitungen enthalten sein können, sind z.B. Sorbit oder Glucose.

Geeignete Polyalkylenglykole, die in den erfindungsgemäßen Farbstoffzubereitungen enthalten sein können, sind insbesondere Polyethylen- oder Polypropylenglykole, die beispielsweise ein mittleres Molekulargewicht von 100 bis 1000, vorzugsweise 100 bis 600 und insbesondere ca. 400 aufweisen. Gegebenenfalls können auch Ethylenoxid/ Propylenoxid-Copolymere zur Anwendung gelangen.

Weiterhin bevorzugt sind Farbstoffzubereitungen, die zusätzlich, bezogen auf das Gewicht der Zubereitung, 10 bis 90 Gew.-%, vorzugsweise 10 bis 70 Gew.-%. eines ein- oder mehrwertigen Alkohols oder deren Mischungen enthalten.

Geeignete ein- oder mehrwertige Alkohole sind in der Regel Alkanmono- oder -polyole, die 2 bis 8 Kohlenstoffatome, vorzugsweise 2 bis 6 Kohlenstoffatome und bis zu 4, vorzugsweise bis zu 3, alkoholische Hydroxygruppen aufweisen. Beispielhaft sind zu nennen Ethan-1,2-diol, Propan-1,2-diol, Propan-1,3-diol, Glycerin, Pentan-1,2,5-triol oder Hexan-1,2,6-triol.

Weitere Bestandteile der erfindungsgemäßen Farbstoffzubereitungen können z.B. Hilfsmittel, wie Konservierungsmittel, Antioxidantien, Schaumverhinderungsmittel oder Mittel zur Regulierung der Viskosität sein. Diese Mittel sind an sich bekannt und handelsüblich. Wenn diese Mittel in den erfindungsgemäßen Farbstoffzubereitungen zugegen sind, beträgt ihre Gesamtmenge in der Regel 1 Gew.-% oder weniger, bezogen auf das Gewicht der Zubereitung.

Weiterhin können in bevorzugten Farbstoffzubereitungen auch Tenside zur Reduzierung zur Oberflächenspannung und zur Verbesserung des Benetzungsverhaltens im Tintenkopf zur Anwendung gelangen.

Bevorzugte Farbstoffzubereitungen enthalten Tenside auf der Basis von ethoxylierten oder propoxylierten Fett- oder Oxoalkoholen, Propylenoxid-Ethylenoxid-Blockcopolymeren, Ethoxylaten von Ölsäure oder Alkylphenolen, Alkylphenolethersulfaten, Alkylpolyglycosiden, Alkylphosphonaten, Alkylphenylphosphonaten, Alkylphosphonaten, Alkylphenylphosphaten oder Alkindiolen.

Selbstverständlich beträgt die Summe der Bestandteile in den erfindungsgemäßen Farbstoffpräparationen jeweils 100 Gew.-%. Sofern die Summe der Bestandteile der erfindungsgemäßen Farbstoffzubereitungen einen Wert ergibt, der kleiner als 100 Gew.-% ist, ist der restliche Bestandteil in der Regel Wasser.

Die erfindungsgemäßen Farbstoffzubereitungen weisen üblicherweise eine Viskosität von 1 bis 4 $mm^2$/sec, vorzugsweise 2 bis 3,5 $mm^2$/sec auf.

Die Oberflächenspannung der erfindungsgemäßen Farbstoffzubereitungen beträgt in der Regel 30 bis 70

Nm/m, vorzugsweise 40 bis 60 Nm/m.

Der pH-Wert der erfindungsgemäßen Farbstoffzubereitungen liegt im allgemeinen bei 2 bis 11, vorzugsweise 3 bis 10.

Die Herstellung der neuen Farbstoffzubereitungen erfolgt auf an sich bekanntem Weg. So kann man den Farbstoff, beispielsweise in Form eines Preßkuchens, zusammen mit dem Dispergiermittel und gegebenenfalls Polyethylenglykol in Gegenwart von Wasser mischen und in einer geeigneten Apparatur vordispergieren. Die resultierende Mischung kann dann in einer Mühle behandelt werden, um die gewünschte Größe der Farbstoffteilchen einzustellen. Schließlich kann man die Endeinstellung vornehmen, indem man noch entsprechende Mengen Wasser, gegebenenfalls Polyethylenglykol und/oder Kohlenhydrate und gegebenenfalls weitere Hilfsmittel zusetzt und nach dem Mischen mittels eines Siebs, vorzugsweise mit einer Porengröße von 1 µm, filtriert.

Die erfindungsgemäßen Farbstoffzubereitungen eignen sich in vorteilhafter Weise als Tinten im Ink-Jet-Verfahren sowie für den textilen Sublimations-Transferdruck.

Beim Ink-Jet-Verfahren (Tintenstrahldruck-Verfahren) verwendet man üblicherweise wäßrige Tinten, die in kleinen Tröpfchen direkt auf das Substrat gesprüht werden. Man unterscheidet dabei ein kontinuierliches Verfahren, bei dem die Tinte gleichmäßig durch eine Düse gepreßt und durch ein elektrisches Feld, abhängig vom zu druckenden Muster, auf das Substrat gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text. Chem. Color, Band 19 (8), Seiten 23 bis 29, 1987, und Band 21 (6), Seiten 27 bis 32, 1989, beschrieben.

Besonders geeignet sind die erfindungsgemäßen Farbstoffzubereitungen als Tinten für das Bubble-Jet-Verfahren oder für das Verfahren mittels eines piezoelektrischen Kristalls.

Geeignete Substrate für das Ink-Jet-Verfahren sind neben Papier auch die im folgenden aufgeführten Trägermaterialien.

Beim textilen Sublimations-Transferdruck wird ein Muster zunächst auf einem Zwischenträger vorgebildet und anschließend durch Hitzeeinwirkung auf einen Träger übertragen. Der Farbstoff kann sowohl beim Transfer selbst als auch in einem anschließenden Fixier- und Nachbehandlungsprozeß fixiert werden. Dieses Verfahren ist allgemein bekannt und z.B. in Ullmann's Encyclopedia of Industrial Chemistry, 5th Edition, Band A26, Seiten 499 bis 501, beschrieben.

Geeignete Träger sind insbesondere textile Materialien, z.B. Fasern, Garne, Zwirne, Maschenware, Webware oder Non-wovens aus Polyester, modifiziertem Polyester, z.B. anionisch modifiziertem Polyester, Mischgewebe von Polyester mit Cellulose, Baumwolle, Viskose oder Wolle, Polyamid, Polyacrylnitril, Triacetat, Acetat, Polycarbonat, Polypropylen oder Polyvinylchlorid, Polyestermikrofasern oder auch mit Kunststoffen beschichtete Träger, wie Metallfolien, Glas oder Keramik.

Die neuen Farbstoffzubereitungen zeichnen sich dadurch aus, daß sie beim Ink-Jet-Verfahren zu keiner Verstopfung der Düsen führen. Weiterhin erhält man bei ihrer Anwendung streifenfreie Drucke.

Die folgenden Beispiele sollen die Erfindung näher erläutern.

Farbstoffe:

Tabelle 1

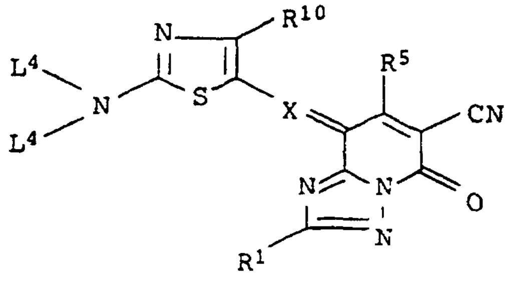

| Farbstoff-Nr. | $L^4L^5N$ | $R^{10}$ | X | $R^5$ | $R^1$ |
|---|---|---|---|---|---|
| 1 | $(C_4H_9)_2N$ | $C_6H_5$ | N | $CH_3$ | $CH(C_2H_5)C_4H_9$ |
| 2 | $[(CH_3)_2CH]_2N$ | $C_6H_5$ | N | $CH_3$ | $CH(C_2H_5)C_4H_9$ |
| 3 | $(C_4H_9)_2N$ | $C(CH_3)_3$ | CH | $CH_3$ | $CH(C_2H_5)C_4H_9$ |
| 4 | $(C_6H_{13})_2N$ | H | CH | $CH_3$ | $CH_3$ |

Tabelle 2

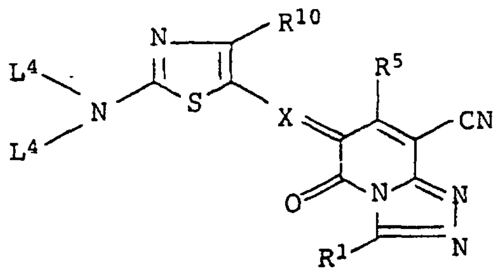

| Farbstoff-Nr. | $L^4L^5N$ | $R^{10}$ | X | $R^5$ | $R^1$ |
|---|---|---|---|---|---|
| 5 | $[(CH_3)_2CH]_2N$ | $CH(C_2H_5)C_4H_9$ | CH | $CF_3$ | $CH(CH_3)_2$ |
| 6 | $(C_4H_9)_2N$ | $C_6H_5$ | CH | $CF_3$ | $CH(CH_3)_2$ |
| 7 | $(C_6H_9)_2N$ | $C_6H_5$ | CH | $CH_3$ | $CH(CH_3)_2$ |

Farbstoff Nr. 8

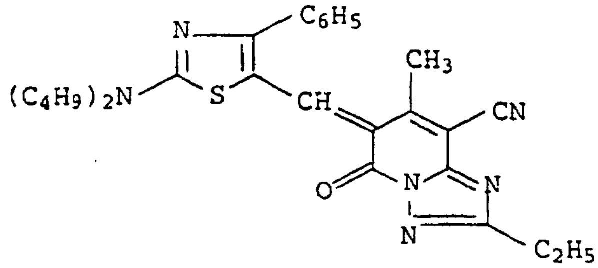

Tabelle 3

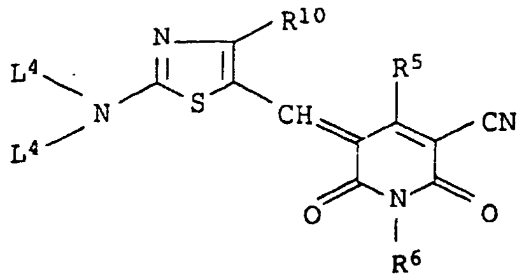

| Farbstoff-Nr. | $L^4L^5N$ | $R^{10}$ | $R^5$ | $R^6$ |
|---|---|---|---|---|
| 9 | $(C_2H_5)_2N$ | $C(CH_3)_3$ | $CH_3$ | $C_4H_9$ |
| 10 | $(C_4H_9)_2N$ | $C_6H_5$ | $CH_3$ | 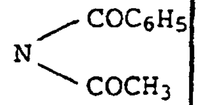 |
| 11 | $(C_4H_9)_2N$ | $C(CH_3)_3$ | $CH_3$ | $C_4H_9$ |
| 12 | $(C_4H_9)_2N$ | $C_6H_5$ | $CF_3$ | $C_4H_9$ |
| 13 | $(C_2H_5)_2N$ | $C(CH_3)_3$ | $CH_3$ | $CH_3$ |
| 14 | $(C_4H_9)_2N$ | $C(CH_3)_3$ | $CH_3$ | $C_3H_6OCH_3$ |
| 15 | $(C_4H_9)_2N$ | $CH(CH_3)_3$ | $CF_3$ | $CH_3$ |
| 16 | 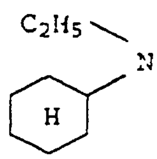 | $C_6H_5$ | $CH_3$ | $NHCOC_6H_5$ |
| 17 | $(C_4H_9)_2N$ | $CH_2C(CH_3)_3$ | $CF_3$ | $C_2H_5$ |
| 18 | $(C_6H_{13})_2N$ | $C_6H_5$ | $CH_3$ | $CH_3$ |
| 19 | $[C_2H_5(CH_3)CH]_2N$ | $C(CH_3)_3$ | $CH_3$ | $CH_3$ |

Tabelle 4

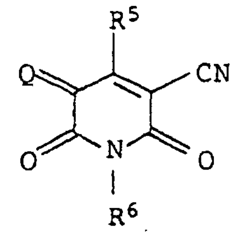

| Farbstoff-Nr. | Q | $R^5$ | $R^6$ |
|---|---|---|---|
| 20 | 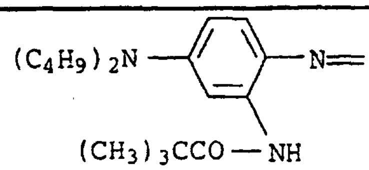 | $CH_3$ | $C_4H_9$ |
| 21 | 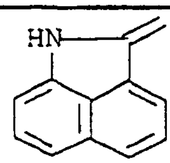 | $CH_3$ | $C_6H_{13}$ |
| 22 | 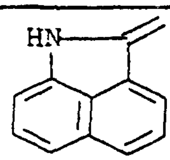 | H | $C_7H_{15}$ |
| 23 | 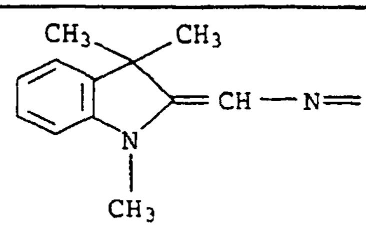 | $CH_3$ | $C_4H_9$ |
| 24 | 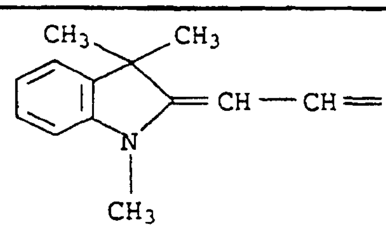 | $CF_3$ | $CH_2CH(C_2H_5)C_4H_9$ |

Dispergiermittel:

Als Dispergiermittel auf Basis eines Arylsulfonsäure-Formaldehyd-Kondensationsproduktes kam ein Produkt zur Anwendung, das zusätzlich noch Benzoesäure enthält und in der US-A-5 186 846 als Beispiel 3 beschrieben ist (Dispergiermittel 1).

Als Dispergiermittel kam weiterhin ein wasserlösliches Dispergiermittel auf Basis von oxalkylierten Phenolen zur Anwendung, das in der US-A-4 218 218 als Beispiel 13 beschrieben ist (Dispergiermittel 2).

A) Textile Applikation

Herstellung der Farbstoffzubereitung (Vorschrift 1)

15 g Farbstoff, 15 g Polyethylenglykol (mittl. Molekulargewicht: 400), 7,5 g Dispergiermittel, 0,37 g 50 gew.-%ige wäßrige Lösung von Glutardialdehyd und 0,75 g 47 gew.-%ige wäßrige Lösung von Tetramethylolacetylendiharnstoff werden mit Wasser zum Gesamtgewicht vcn 100 g aufgefüllt und in einer Mühle angeteigt. Danach wird der pH-Wert mit 10 gew.-%iger Natronlauge auf 8,5 gestellt.

Anschließend wird die Mischung in einer Rührwerkskugelmühle gemahlen, so daß 99 % der Farbstoffteilchen eine Größe von kleiner 1 µm besitzen.

Zur Endeinstellung werden 26,7 g Mahlgut mit weiteren 4 g Polyethylenglykol (s.o.), 0,1 g 50 gow.-%ige wäßrige Lösung von Glutardialdehyd, 0,3 g 47 gew.-%ige wäßrige Lösung von Tetramethylolacetylendiharnstoff und 20 g 70 gew.-%iger wäßriger Sorbitlösung versetzt, mit Wasser bis zu einem Gesamtgewicht von 100 g aufgefüllt, gemischt und über ein Sieb mit einer Porengröße von 1 µm filtriert.

Man erhielt folgende Farbstoffzubereitungen. (Die Prozentangdben sind jeweils Gewichtsprozente.)

Tabelle 5

| | Zubereitung Nr. | |
|---|---|---|
| | 1 | 2 |
| Farbstoff Nr. 1 | 3 % | 3 % |
| Dispergiermittel 1 | 1,5 % | |
| Dispergiermittel 2 | | 1,5 % |
| Polyethylenglykol | 6 % | 6 % |
| 70 %ige wäßrige Lösung von Sorbit | 20 % | 20 % |
| 50 %ige wäßrige Lösung von Glutardialdehyd | 0,2 % | 0,2% |
| 4 %ige wäßrige Lösung von Tetramethylolacetylenharnstoff | 0,5 % | 0,5 % |
| vollentsalztes Wasser | 69,1 % | 69,1 % |
| Gesamt | 100 % | 100 % |

Die Farbstoffzubereitungen weisen folgende physikalischen und drucktechnischen Eigenschaften auf.

Tabelle 6

| | Zubereitung Nr. | |
|---|---|---|
| | 1 | 2 |
| pH-Wert | 8,5 | 3,5 |
| Oberflächenspannung [mN/m] | 45,9 | 48,0 |
| Viskosität [$mm^2$/sec] | 2,54 | 2,4 |
| Teilchengrößenverteilung [µm] X 50 | 0,51 | 0,51 |
| Teilchengrößenverteilung [µm] nach Alterung a) X 50 | 0,55 | 0,55 |
| Teilchengrößenverteilung [µm] nach Alterung b) X 50 | 0,52 | C,52 |
| Tropfengewicht [ng] 10 Millionen Tropfen Minimum/Maximum | 95/99 | 63/66 |
| Dispersionsfaktor | > 99 % | > 99 % |

Testmethoden und Bewertungen

1) Oberflächenspannung

Die Oberflächenspannung wurde mit dem Digital-Tensiometer K 10 der Fa. Krüss bestimmt. Die in Tabelle 2 angegebenen Werte sind die Mittelwerte aus 3 Messungen.

2) Viskosität
Die Viskosität wurde nach der Ubbelohde Methode (DIN 51662) bestimmt.

3) pH-Wert
Der pH-Wert wurde mit pH-Meter 763 der Fa. Knick bestimmt.

4) Teilchengrößenbestimmung
Die Teilchengrößenverteilung wurde mit einem CILAS Granulometer HR 850 der Fa. Alcatel gemessen.

5) Alterungsstabilität
Die Alterungsstabilität der Zubereitungen (Tinten) wurde nach 2 Methoden untersucht:

a) nach einem Wärmebelastungstest (Warmlagerung der Tinten für 3 Tage bei 60°C)

b) nach einem Gefrier-/Wärmebehandlungszyklus (Einfrieren der Tinten für 4 h bei -20°C und anschließende Wärmebehandlung für 4 h bei 70°C). Dieser Temperaturzyklus wurde jeweils 4 mal durchlaufen

Nach beiden Alterungstests wurde die Teilchengrößenverteilung der belasteten Tinten mit der CILAS-Methode erneut ermittelt.

6) Kogationstest
Von besonderer Wichtigkeit ist das Verhalten der Tinten während des Druckvorgangs in den Düsen. Die Neigung der Tinten Ablagerungen und Verstopfungen in den Düsen zu bilden, wurde mit nachstehendem Test überprüft.
Als Testgerät wurden ein modifizierter Desk Jet Plus (Bubble Jet-Drucker) der Fa. Hewlett-Packard verwendet.
Zunächst wurde das mittlere Tropfengewicht in Abhängigkeit der, an die Düsen angelegten Spannung ermittelt. Anschließend wurden bei konstanter Spannung 1 Million Impulse an jede Düse gegeben und danach erneut das mittlere Tropfengewicht einer definierten Tropfenanzahl bestimmt. Dieser Vorgang wurde insgesamt 10 mal wiederholt.
Bei idealem Verhalten der Tinten sollte das mittlere Tropfengewicht über den Versuchszeitraum konstant bleiben.
Die Veränderung des Tropfengewichtes der einzelnen Tinten ist in Tabelle 2 angeführt.

7) Disperionsfaktor
100 ml der entsprechenden Tinte wurden für 7 Tage bei Raumtemperatur in einem Meßzylinder gelagert. Anschließend wurden 10 ml der Dispersion vom Boden und 10 ml von der Oberfläche entnommen und jeweils die Farbstärke photometrisch bestimmt.
Der Dispersionsfaktor errechnet sich aus Farbstärke der oberen Dispersion/Farbstärke der unteren Dispersion x 100 = Dispersionsfaktor.

B) Applikation auf Papier

Herstellung der Farbstoffzubereitung (Vorschrift 2)

10 g Farbstoff, 5 g Dispergiermittel Nr. 1 und 135 ml Wasser werden in einer Rührwerkskugelmühle gemahlen. Zur Endeinstellung wird soviel Wasser zugegeben, daß der Anteil an Farbstoff an der wäßrigen Präparation 3 Gew.-% beträgt.

Herstellung von Ink-Jet-Drucken auf Papier

Die Herstellung der Drucke erfolgte mit einem handelsüblichen Ink-Jet-Drucker der Firma Hewlett-Packard (HP 500) auf folgende handelsübliche Papiere

a) Intercopy Papier
b) Claire Fontaine Papier

c) Premium Glossy Papier der Firma Hewlett-Packard
d) Ink-Jet Papier der Firma Zweckform
e) Spezialbeschichtetes Papier der Firma Epson

Außerdem wurden Druckversuche auf einem Papier f) vorgenommen, das wie folgt beschichtet wurde:

Intercopy Papier wurde zunächst mit einer 10 gew.-%igen Lösung von Polyvinylalkohol, gelöst in einer Mischung aus Toluol/Methylethylketon/Cyclohexanon (20:45:20 v/v/v) mittels einer 12 µm-Rakel, anschließend mit einer 5 gew.-%igen Lösung von Ethylhydroxyethylcellulose in Toluol/Ethanol (8:2 v/v) ebenfalls mittels einer 12 µm-Rakel und schließlich mit einer 5 gew.-%igen wäßrigen Lösung von Carboxymethylcellulose mittels einer 24 µm-Rakel beschichtet.

Als Zubereitungen für die Druckversuche dienten die mit den Farbstoffen Nr. 1 bis 24 nach der Vorschrift 2 hergestellten Zubereitungen, die vor ihrer Anwendung jeweils mit Wasser auf das doppelte Volumen verdünnt wurden.

Nach 24 h Trocknungszeit weisen die so hergestellten Drucke auf den obengenannten Papieren gute Abriebfestigkeit, gute Wasserechtheit sowie gute Lichtechtheit auf. Werden die Drucke zusätzlich getempert (30 sec bei 150°C), so wird eine deutliche Erhöhung der Farbstärke und der Brillanz beobachtet. Zudem erhöht sich die Abriebfestigkeit und die Lichtechtheit und man erhält eine egalere Färbung. Diese Beobachtungen sind auf den Papieren d) und e) besonders stark ausgeprägt.

Mit den Farbstoffen Nr. 9 und 10 wurden auf dem Papier e) nach der Temperung bei der Belichtung mit Normlicht NLD 65 (Einfallwinkel 10 grad) folgende Werte erhalten.

Tabelle 7

| | Farbstoff-Nr. | |
|---|---|---|
| | 9 | 10 |
| L* (getempert) | 59,12 | 55,51 |
| L* (ungetempert) | 67,71 | 62,56 |
| C* (getempert) | 74,35 | 80,04 |
| C* (ungetempert) | 68,16 | 62,67 |
| HGD (getempert) | 5,33 | 341,79 |
| HGD (ungetempert) | 357,00 | 337,35 |

L*, C*, HGD: Farbparameter in der Coloristik, s. DIN 5033-3 (1979), Teil 1: Grundbegriffe der Farbmetrik

Ähnlich günstige Ergebnisse werden mit den Farbstoffen 1 bis 8 sowie 11 bis 24 erhalten.

**Patentansprüche**

**1.** Farbstoffzubereitungen, enthaltend, jeweils bezogen auf das Gewicht der Zubereitung, 0,1 bis 30 Gew.-% eines oder mehrerer Methinfarbstoffe, 0,1 bis 20 Gew.-% eines Dispergiermittels auf Basis eines Arylsulfonsäure-Formaldehyd-Kondensationsprodukts, das einen Gehalt von 3 bis 50 Gew.-%, bezogen auf das Gewicht des Dispergiermittels, einer oder mehrerer aromatischen oder langkettigen aliphatischen Carbonsäuren, deren Salzen, deren Anhydriden oder einer Mischung hieraus aufweist, oder 0,1 bis 20 Gew.-% eines wasserlöslichen Dispergiermittels auf Basis von oxalkylierten Phenolen der Formel III oder IV

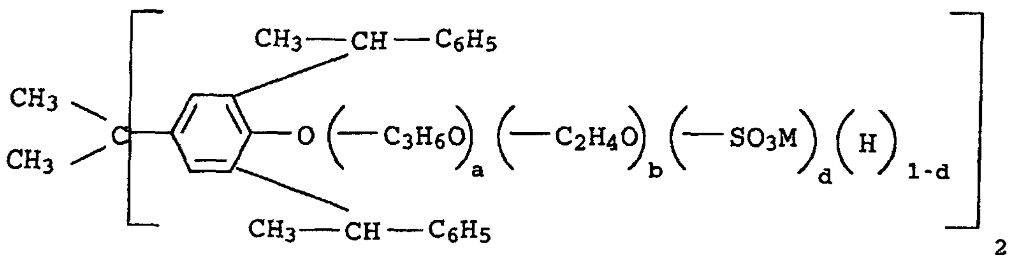

(III)

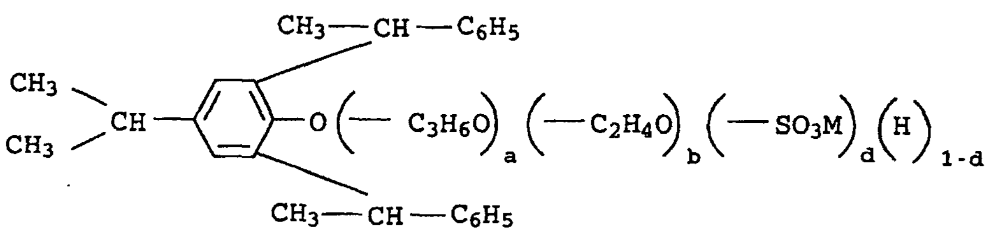

(IV),

worin

M Alkalimetall, beispielsweise Na oder K,

a 0 bis im Mittel 125,

b im Mittel 37 bis 250, wobei im Falle b>37, das Verhältnis b:a mindestens 1:1 ist, und

d 0 oder 1 bedeuten,

oder deren Gemische
und gegebenenfalls Wasser.

2. Farbstoffzubereitungen nach Anspruch 1, **dadurch gekennzeichnet, daß** sie, jeweils bezogen auf das Gewicht der Zubereitung 1 bis 15 Gew.-% eines oder mehrerer Methinfarbstoffe, 0,5 bis 10 Gew.-% Dispergiermittel und gegebenenfalls Wasser enthalten.

3. Farbstoffzubereitungen nach Anspruch 1, **dadurch gekennzeichnet, daß** sie zusätzlich, jeweils bezogen auf das Gewicht der Zubereitung, 0,1 bis 30 Gew.-% eines Kohlenhydrats und 0,1 bis 20 Gew.-% eines Polyalkylenglykols enthalten.

4. Farbstoffzubereitungen nach Anspruch 1, **dadurch gekennzeichnet, daß** sie zusätzlich, bezogen auf das Gewicht der Zubereitung, 10 bis 90 Gew.-% eines ein- oder mehrwertigen Alkohols oder deren Mischungen enthalten.

5. Farbstoffzubereitungen nach Anspruch 1, **dadurch gekennzeichnet, daß** 99 % der in der Zubereitung enthaltenen Farbstoffteilchen kleiner sind als 1 µm.

6. Farbstoffzubereitungen nach Anspruch 1, **dadurch gekennzeichnet daß** sie Methinfarbstoffe der Formel Ia, Ib oder Ic

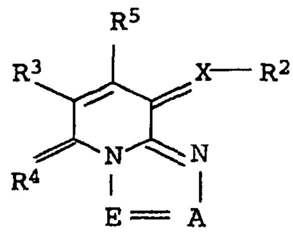
(Ia),

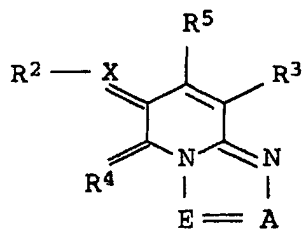
(Ib),

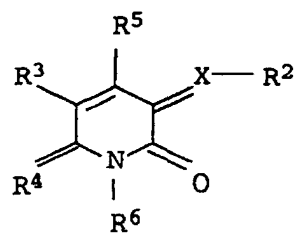
(Ic),

enthalten, worin

X Stickstoff oder CH

einer der beiden Reste A oder E Stickstoff und der andere einen Rest der Formel C-$R^1$, in der $R^1$ für $C_1$-$C_{20}$-Alkyl, das gegebenenfalls substituiert ist und durch ein bis vier Sauerstoffatome in Etherfunktion unterbrochen sein kann, gegebenenfalls substituiertes Phenyl oder Hydroxy steht,

$R^2$ einen Rest aus der Benzol-, Indol-, Chinolin-, Aminonaphthalin-, Pyrrol-, Benzimidazol-, Benzthiazol-, Aminothiophen- oder Diaminopyridinreihe,

$R^3$ Cyano, Carbamoyl, Carboxyl oder $C_1$-$C_4$-Alkoxycarbonyl,

$R^4$ Sauerstoff oder einen Rest der Formel $C(CN)_2$, $C(CN)COOL^1$ oder $C(COOL^1)_2$, wobei $L^1$ jeweils für $C_1$-$C_8$-Alkyl, das gegebenenfalls durch ein oder zwei Sauerstoffatome in Etherfunktion unterbrochen ist, oder Phenyl steht,

$R^5$ Wasserstoff, $C_1$-$C_8$-Alkyl, das gegebenenfalls substituiert ist und durch ein oder zwei Sauerstoffatome in Etherfunktion unterbrochen sein kann, oder gegebenenfalls substituiertes Phenyl und

$R^6$ $C_1$-$C_{20}$-Alkyl, das gegebenenfalls substituiert ist und durch ein bis vier Sauerstoffatome in Etherfunktion unterbrochen sein kann, gegebenenfalls substituiertes Phenyl, Hydroxy oder einen Rest der Formel $NL^2L^3$, wobei $L^2$ und $L^3$ unabhängig voneinander jeweils für Wasserstoff, gegebenenfalls substituiertes $C_1$-$C_{12}$-Alkyl, $C_5$-$C_7$-Cycloalkyl, gegebenenfalls substituiertes Phenyl, gegebenenfalls substituiertes Pyridyl, gegebenenfalls substituiertes $C_1$-$C_{12}$-Alkanoyl, $C_1$-$C_{12}$-Alkoxycarbonyl, gegebenenfalls substituiertes $C_1$-$C_{12}$-Alkylsulfonyl, $C_5$-$C_7$-Cycloalkylsulfonyl, gegebenenfalls substituiertes Phenylsulfonyl, gegebenenfalls substituiertes Pyridylsulfonyl, gegebenenfalls substituiertes Benzoyl, Pyridylcarbonyl oder Thienylcarbonyl oder $L^2$ und $L^3$ zusammen mit dem sie verbindenden Stickstoffatom gegebenenfalls durch $C_1$-$C_4$-Alkyl substituiertes Succinimido, gegebenenfalls durch $C_1$-$C_4$-Alkyl substituiertes Phthalimido oder einen fünf- oder sechsgliedrigen gesättigten heterocyclischen Rest, der gegebenenfalls weitere Heteroatome enthält, stehen, bedeuten.

7. Verwendung der Farbstoffzubereitungen gemäß Anspruch 1 als Tinten im Ink-Jet-Verfahren.

8. Verwendung der Farbstoffzubereitungen gemäß Anspruch 1 als Tinten im textilen Sublimations-Transferdruck.

## Claims

1. Dye preparations comprising, based on the weight of the preparation, from 0.1 to 30% by weight of one or more methine dyes, from 0.1 to 20% by weight of a dispersant based on an arylsulfonic acid-formaldehyde condensation product comprising from 3 to 50% by weight, based on the weight of the dispersant, of one or more aromatic or long-chain aliphatic carboxylic acids, their salts, their anhydrides or a mixture thereof, or from 0.1 to 20% by weight of a water-soluble dispersant based on alkoxylated phenols of the formula III or IV

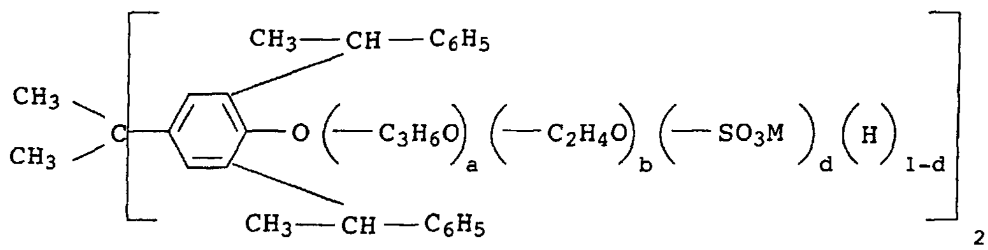

(III)

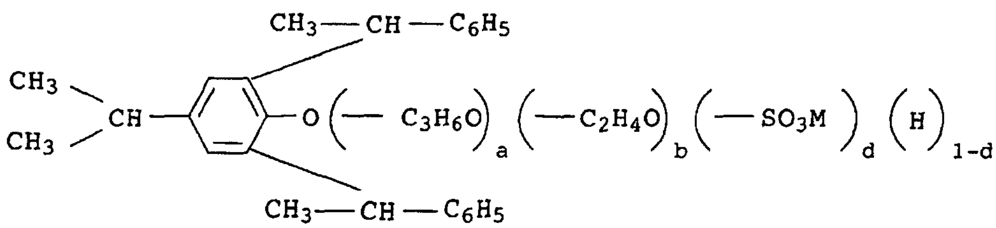

(IV),

where

M is an alkali metal, for example Na or K,

a is from 0 to, on average, 125,

b is on average from 37 to 250, the ratio of b:a being at least 1:1 in the case of b>37, and

d is 0 or 1,

or mixtures thereof
and optionally water.

**2.** Dye preparations as claimed in claim 1, comprising, based on the weight of the preparation, from 1 to 15% by weight of one or more methine dyes, from 0.5 to 10% by weight of a dispersant and optionally water.

**3.** Dye preparations as claimed in claim 1, further comprising, based on the weight of the preparation, from 0.1 to 30% by weight of a carbohydrate and from 0.1 to 20% by weight of a polyalkylene glycol.

**4.** Dye preparations as claimed in claim 1, further comprising, based on the weight of the preparation, from 10 to 90% by weight of a mono- or polyhydric alcohol or mixtures thereof.

**5.** Dye preparations as claimed in claim 1, wherein 99% of the dye particles are smaller than 1 μm.

**6.** Dye preparations as claimed in claim 1, comprising methine dyes of the formula Ia, Ib or Ic

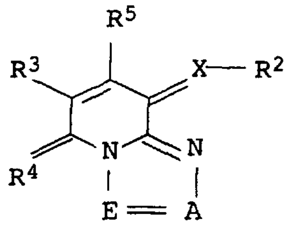

(Ia),

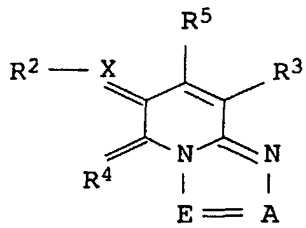

(Ib),

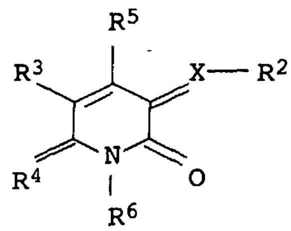

(Ic),

where

X is nitrogen or CH,
one of the two radicals A and E is nitrogen and the other is a radical of the formula $C-R^1$, where $R^1$ is $C_1$-$C_{20}$-alkyl with or without substitution and with or without interruption by from one to four oxygen atoms in ether function, substituted or unsubstituted phenyl or hydroxyl,

$R^2$ is a radical of the benzene, indole, quinoline, aminonaphthalene, pyrrole, benzimidazole, benzthiazole, aminothiophene or diaminopyridine series,

$R^3$ is cyano, carbamoyl, carboxyl or $C_1$-$C_4$-alkoxycarbonyl,

$R^4$ is oxygen or a radical of the formula $C(CN)_2$, $C(CN)COOL^1$ or $C(COOL^1)_2$, where $L^1$ is in each case $C_1$-$C_8$-alkyl with or without interruption by one or two oxygen atoms in ether function, or phenyl,

$R^5$ is hydrogen, $C_1$-$C_8$-alkyl with or without substitution and with or without interruption by one or two oxygen atoms in ether function, or substituted or unsubstituted phenyl, and

$R^6$ is $C_1$-$C_{20}$-alkyl with or without substitution and with or without interruption by one to four oxygen atoms in ether function, substituted or unsubstituted phenyl, hydroxyl or a radical of the formula $NL^2L^3$, where $L^2$ and $L^3$ are independently of each other hydrogen, substituted or unsubstituted $C_1$-$C_{12}$-alkyl, $C_5$-$C_7$-cycloalkyl, substituted or unsubstituted phenyl, substituted or unsubstituted pyridyl, substituted or unsubstituted $C_1$-$C_{12}$-alkanoyl, $C_1$-$C_{12}$-alkoxycarbonyl, substituted or unsubstituted $C_1$-$C_{12}$-alkylsulfonyl, $C_5$-$C_7$-cycloalkylsulfonyl, substituted or unsubstituted phenylsulfonyl, substituted or unsubstituted pyridylsulfonyl, substituted or unsubstituted benzoyl, pyridylcarbonyl or thienylcarbonyl, or $L^2$ and $L^3$ are together with the linking nitrogen atom unsubstituted or $C_1$-$C_4$-alkyl-substituted succinimido, unsubstituted or $C_1$-$C_4$-alkyl-substituted phthalimido or a five- or six-membered saturated heterocyclic radical which optionally contains further hetero atoms.

**7.** The use of the dye preparations of claim 1 as inks in the inkjet process.

**8.** The use of the dye preparations of claim 1 as inks in textile sublimation transfer printing.

**Revendications**

**1.** Préparations de colorants contenant, à chaque fois par rapport au poids de la préparation, un ou plusieurs colorants méthiniques à raison de 0,1% à 30% en poids, un agent dispersant, à raison de 0,1% à 20% en poids, à base du produit de condensation de l'acide arylsulfonique/formaldéhyde qui présente une teneur comprise entre 3% et 50% en poids, par rapport au poids de l'agent dispersant, en un ou plusieurs acides carboxyliques aliphatiques à chaîne longue ou aromatiques, en leurs sels, en leurs anhydrides ou en un mélange de ces composés, ou bien un agent dispersant, à raison de 0,1% à 20% en poids, qui est soluble dans l'eau et qui est à base de phénols oxalkylés de formule III ou IV

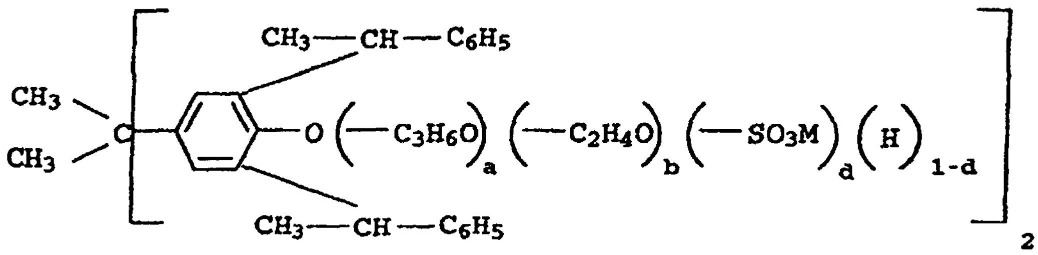

(III)

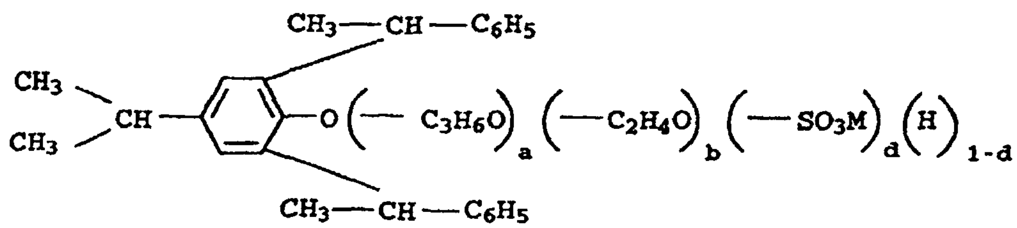

(IV),

dans lesquelles

- M représente un atome d'un métal alcalin, par exemple de Na ou de K,
- a représente un nombre qui est en moyenne compris entre 0 et 125,
- b représente un nombre qui est en moyenne compris entre 37 et 250, où, dans le cas où b>37, le rapport b:a est au moins de 1:1 et
- d vaut 0 ou 1,

ou à base de leurs mélanges
et éventuellement de l'eau.

**2.** Préparations de colorants selon la revendication 1, **caractérisées en ce qu'**elles contiennent, à chaque fois par rapport au poids de la préparation, un ou plusieurs colorants méthiniques à raison de 1% à 15% en poids, l'agent dispersant à raison de 0,5% à 10% en poids et éventuellement de l'eau.

**3.** Préparations de colorants selon la revendication 1, **caractérisées en ce qu'**elles contiennent de plus, à chaque fois par rapport au poids de la préparation, un hydrocarbure à raison de 0,1% à 30% en poids et un polyalkylèneglycol à raison de 0,1% à 20% en poids.

**4.** Préparations de colorants selon la revendication 1, **caractérisées en ce qu'**elles contiennent de plus, par rapport au poids de la préparation, un monoalcool ou un polyol ou leurs mélanges à raison de 10% à 90% en poids.

**5.** Préparations de colorants selon la revendication 1, **caractérisées en ce que** 99% des particules de colorant présentent une granulométrie inférieure à 1 µm.

**6.** Préparations de colorants selon la revendication 1, **caractérisées en ce qu'**elles contiennent les colorants méthiniques de formule Ia, Ib ou Ic

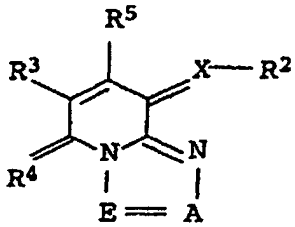

(Ia),

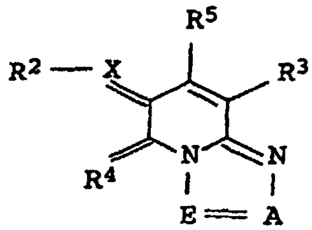

(Ib),

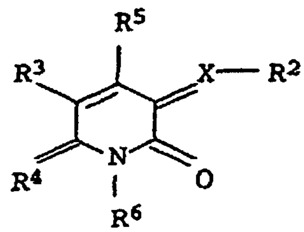

(Ic),

dans lesquelles

X représente un atome d'azote ou le groupe CH,
un des deux restes A et E représente un atome d'azote et l'autre représente un reste de formule $C\text{-}R^1$ dans laquelle $R^1$ représente un groupe alkyle en $C_1$ à $C_{20}$ qui est éventuellement substitué et qui est éventuellement interrompu par un à quatre atomes d'oxygène à fonction éther, ou bien un groupe hydroxyle ou phényle qui est éventuellement substitué,

$R^2$ représente un reste choisi dans le groupe formé par les séries des benzènes, des indoles, les quinoléines, des aminonaphtalènes, des pyrroles, des benzimidazoles, des benzothiazoles, des aminothiophènes et des diamino-pyridines,

$R^3$ représente un groupe cyano, carbamoyle, carboxyle ou (alcoxy en $C_1$ à $C_4$)carbonyle,

$R^4$ représente un atome d'oxygène ou un reste de formule $C(CN)_2$, $C(CN)COOL^1$ ou $C(COOL^1)_2$ dans lesquelles $L^1$ représente à chaque fois un groupe alkyle en $C_1$ à $C_8$ qui est éventuellement interrompu par un ou deux atomes d'oxygène à fonction éther ou bien représente un groupe phényle,

$R^5$ représente un atome d'hydrogène, un groupe alkyle en $C_1$ à $C_8$ qui est éventuellement substitué et qui est éventuellement interrompu par un ou deux atomes d'oxygène à fonction éther ou représente un groupe phényle qui est éventuellement substitué, et

$R^6$ représente un groupe alkyle en $C_1$ à $C_{20}$ qui est éventuellement substitué et qui est éventuellement interrompu par un à quatre atomes d'oxygène à fonction éther, un groupe hydroxyle, phényle qui est éventuellement substitué ou un reste de formule $NL^2L^3$ dans laquelle $L^2$ et $L^3$ représentent chacun, indépendamment l'un de l'autre, un atome d'hydrogène, un groupe alkyle en $C_1$ à $C_{12}$ qui est éventuellement substitué, un groupe cycloalkyle en $C_5$ à $C_7$, phényle qui est éventuellement substitué, pyridyle qui est éventuellement substitué, alcanoyle en $C_1$ à $C_{12}$ qui est éventuellement substitué, alcoxycarbonyle en $C_1$ à $C_{12}$, alkylsulfonyle en $C_1$ à $C_{12}$ qui est éventuellement substitué, cycloalkylsulfonyle en $C_5$ à $C_7$, phénylsulfonyle qui est éventuellement substitué, pyridylsulfonyle qui est éventuellement substitué, benzoyle qui est éventuellement substitué, pyridylcarbonyle ou thiénylcarbonyle, ou bien $L^2$ et $L^3$ et l'atome d'azote qui les lie forment conjointement un groupe succinimido qui est éventuellement substitué par un groupe alkyle en $C_1$ à $C_4$, un groupe phtalimido qui est éventuellement substitué par un groupe alkyle en $C_1$ à $C_4$ ou un reste hétérocyclique saturé à cinq ou à six maillons qui présente éventuellement des hétéroatomes supplémentaires.

**7.** Mise en oeuvre des préparations de colorants selon la revendication 1, en tant qu'encres dans un procédé à jet d'encre.

**8.** Mise en oeuvre des préparations de colorants selon la revendication 1, en tant qu'encres dans l'impression par transfert à sublimation pour textiles.